# EUROPEAN PATENT APPLICATION

(11) **EP 2 851 149 A1**
(43) Date of publication of application: **25.03.2015**
(21) Application number: 14003257.4
(22) Date of filing: 19.09.2014
(51) Int. Cl.: B23D 61/12

(54) **Recip blade with rib, and method for manufacturing the same**

(30) Priority: 19.09.2013 US 201361879821 P
(71) Applicant: Irwin Industrial Tool Company, Huntersville, NC 28078 (US)
(72) Inventor: Novak, Joseph T., East Longmeadow, MA 01028 (US); Korb, William B., Melrose, CT 06016 (US)
(74) Representative: Schmid, Nils T.F.

(57) **Abstract**

A recip blade (10) includes a blade body (12), a tang (14), a distal end (16), a cutting edge (18), and a rib (20, 21). The tang (14) is located an end of the blade body (12). The distal end (16) is located at an opposite end of the blade body (12) relative to the tang (14). The cutting edge (18) extends in a lengthwise direction at least substantially between the tang (14) and the distal end (16). The rib (20, 21) extends along at least a portion of the blade body (12). The rib (20, 21) and the cutting edge (18) are spaced from one another by a heightwise-extending distance. A method includes: (i) providing a recip blade (10) including the blade body (12), the tang (14), the distal end (16), and the cutting edge (18); (ii) forming the rib (20, 21) by increasing a widthwise-extending thickness of the blade body (12) at the rib (20, 21) in comparison to a widthwise-extending thickness of the blade body (12) at an adjacent portion of the blade body (12).

## Description

### CROSS-REFERENCE TO RELATED APPLICATION

This patent application claims benefit under 35 U.S.C. § 119 to U.S. Provisional Patent Application No. 61/879,821, which was filed on September 19, 2013, and which is hereby incorporated by reference in its entirety.

### TECHNICAL FIELD

Aspects of the present invention relate to a recip blade, and a method for manufacturing the same. Aspects of the present invention more particularly relate to a recip blade that includes one or more ribs, and a method for manufacturing the same.

### BACKGROUND

A recip blade has a "blade life" that corresponds to the number of cuts that the recip blade can perform before the recip blade fails. The blade life of a recip blade can depend at least in part on a stiffness of the recip blade. Prior art recip blades can be relatively flexible (i.e., relatively unstiff), and thus can have a blade life that is shorter in duration than desired. The stiffness of a recip blade (and thus the blade life of a recip blade) typically can be increased by increasing a thickness of the recip blade; however, a relatively thick recip blade can be undesirable for one or more reasons (e.g., increased cost and/or reduced cutting speed).

Aspects of the present invention are directed to these and other problems.

### SUMMARY

According to an aspect of the present invention, a recip blade includes a blade body, a tang, a distal end, a cutting edge, and a rib. The tang is located an end of the blade body. The distal end is located at an opposite end of the blade body relative to the tang. The cutting edge extends in a lengthwise direction at least substantially between the tang and the distal end. The rib extends along at least a portion of the blade body. The rib and the cutting edge are spaced from one another by a heightwise-extending distance.

According to another aspect of the present invention, a recip blade includes a blade body, a tang, a distal end, and a cutting edge. The tang is located at an end of the blade body. The distal end is located at an opposite end of the blade body relative to the tang. The cutting edge extends in a lengthwise direction at least substantially between the tang and the distal end. The recip blade further includes means extending along at least a portion of the blade body for increasing a widthwise-extending thickness of the blade body at the means in comparison to a widthwise-extending thickness of the blade body at an adjacent portion of the blade body. The means and the cutting edge are spaced from one another by a heightwise-extending distance.

According to another aspect of the present invention, a method includes: (i) providing a recip blade having a blade body, a tang located at an end of the blade body, a distal end located at an opposite end of the blade body relative to the tang, and a cutting edge extending in a lengthwise direction at least substantially between the tang and the distal end; and (ii) forming a rib extending along at least a portion of the blade body and being spaced from the cutting edge by a heightwise-extending distance. The forming step is performed by increasing a widthwise-extending thickness of the blade body at the rib in comparison to a widthwise-extending thickness of the blade body at an adjacent portion of the blade body. In some embodiments, the recip blade provided in the providing step further includes a backbone that extends in a lengthwise direction along an opposite side of the blade body relative to the cutting edge; and the forming step further includes forming an upset in the blade body, which upset at least partially defines the rib.

In addition to, or as an alternative to, one or more of the features described above, further aspects of the present invention can include one or more of the following features, individually or in combination:
- the cutting edge is configured to cut metal and/or wood;
- the rib is a first rib, the recip blade further comprises one or more second ribs, and the first rib and the one or more second ribs are spaced from one another by one or more lengthwise-extending distances;
- the rib is at least partially defined by an upset which increases a widthwise-extending thickness of the blade body at the rib in comparison to a widthwise-extending thickness of the blade body in at least an adjacent portion of the blade body;
- the widthwise-extending thickness of the blade body at the rib is at least about 10% greater than the thickness of the blade body at the adjacent portion of the blade body;
- the widthwise-extending thickness of the blade body at the rib is at least about 20% greater than the thickness of the blade body at the adjacent portion of the blade body;
- the widthwise-extending thickness of the blade body at the rib is at least about 30% greater than the thickness of the blade body at the adjacent portion of the blade body;
- the rib is at least partially defined by an upset which increases a widthwise-extending thickness of the blade body at the rib in comparison to a widthwise-extending thickness of an at least substantial remainder of the blade body;
- the widthwise-extending thickness of the blade body at the rib is at least about 10% greater than the thickness of the blade body at the at least substantial remainder of the blade body;
- the widthwise-extending thickness of the blade body at the rib is at least about 20% greater than the thickness of the blade body at the at least substantial remainder of the blade body;
- the widthwise-extending thickness of the blade body at the rib is at least about 30% greater than the thickness of the blade body at the at least substantial remainder of the blade body;
- the rib defines a structural surface, a supporting surface, a raised strip, a raised ridge, and/or a raised surface area extending along at least the portion of the blade body;
- the blade body includes a first side surface and an opposing second side surface, the rib extends in a first widthwise direction relative to the first side surface of the blade body, and the rib extends in an opposing second widthwise direction relative to the second side surface of the blade body;
- the rib extends along at least one-half (1/2) of a length of the blade body;
- the rib extends along at least three-quarters (3/4) of a length of the blade body;
- the rib extends along at least seventh-eighths (7/8) of a length of the blade body;
- the rib extends along at least substantially an entirety of a length of the blade body;
- the blade body further defines a backbone that extends in a lengthwise direction along an opposite side of the blade body relative to the cutting edge, and the backbone defines a backbone length;
- the rib extends along at least substantially an entirety of the backbone length;
- the rib is a first rib, the recip blade further comprises one or more second ribs, the first rib and the one or more second ribs are spaced from one another by one or more lengthwise-extending distances, and the first rib and the one or more second ribs collectively extend along at least one-half (1/2) of the backbone length;
- the first rib and the one or more second ribs collectively extend along at least three-quarters (3/4) of the backbone length.
- the first rib and the one or more second ribs collectively extend along at least seven-eights (7/8) of the backbone length.
- the rib has a rib width that is not greater than a kerf width of the cutting edge;
- the rib width is less than the kerf width;
- the rib is located within the kerf width; and
- the cutting edge includes a plurality of teeth, and at least some of the plurality of teeth are alternatingly set in opposite widthwise-extending directions outwardly from a lengthwise-extending centerline of the recip blade.

One advantage of the present invention and/or of the currently preferred embodiments thereof is that the at least one rib increases the stiffness of the recip blade which can, in turn, increase blade life. Yet another advantage is that the stiffness of the blade can be increased by increasing the cross-sectional thickness of the blade body material only at the rib but not at the other portions of the blade body.

These and other aspects of the present invention will become apparent in light of the drawings and detailed description provided below.

### BRIEF DESCRIPTION OF THE DRAWINGS

FIG. 1 is a side elevation view of an embodiment of the present recip blade.
FIG. 2 is a somewhat schematic cross-sectional view of the recip blade of FIG. 1.
FIG. 3 is a somewhat schematic cross-sectional view of another embodiment of the present recip blade.
FIG. 4 is a somewhat schematic top plan view of a portion of the recip blade of FIG. 1.
FIG. 5 is an elevation view of another embodiment of the present recip blade.
FIG. 6 is a graph illustrating test data showing the improved blade life of a recip blade of the present invention over a control recip blade.

### DETAILED DESCRIPTION

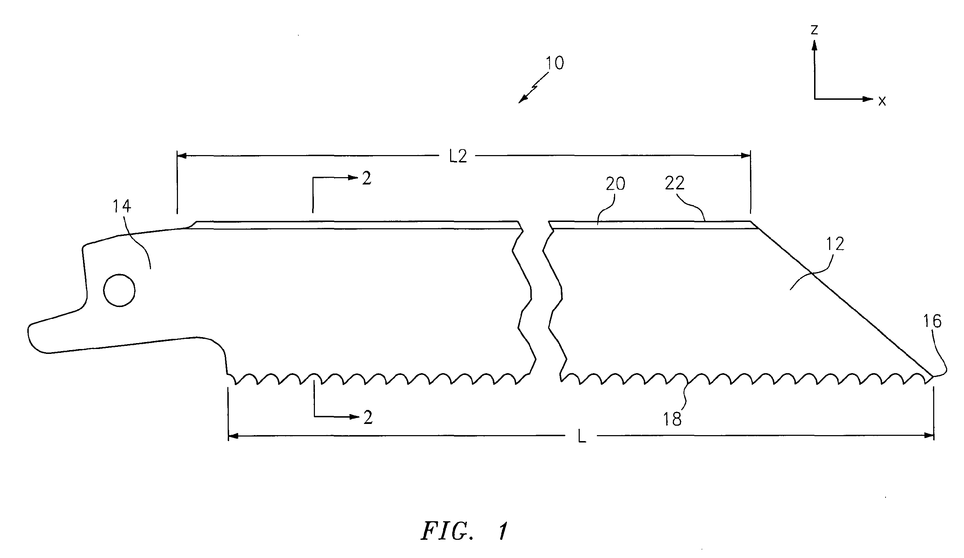

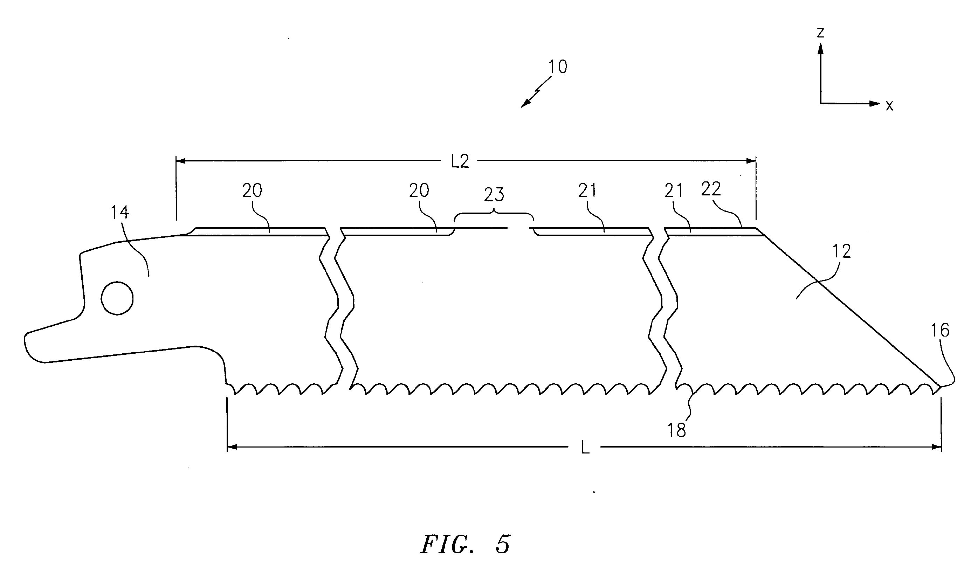

The present disclosure describes a recip blade 10 (see FIGS. 1 and 5), and a method for manufacturing the same.

The present disclosure describes aspects of the present invention with reference to the exemplary embodiments illustrated in the drawings; however, aspects of the present invention are not limited to the exemplary embodiments illustrated in the drawings. The present disclosure may describe one or more features as having a length extending relative to an x-axis, a width extending relative to a y-axis, or a height extending relative to a z-axis. The drawings illustrate the respective axes as necessary. There is no relationship between the axes and the direction of gravity.

Referring to FIGS. 1 and 5, the present recip blade 10 includes a blade body 12, a tang 14 located at one end of the blade body 12, a distal end 16 located at an opposite end of the blade body 12 relative to the tang 14, a cutting edge 18 extending in a lengthwise direction at least substantially between the tang 14 and the distal end 16, and one or more ribs 20, 21 extending along at least a portion of the blade body 12. The ribs 20, 21 and the cutting edge 18 are spaced from one another by one or more heightwise-extending distances.

The tang 14 is positioned at a "tang angle" (not shown) relative to the blade body 12. In some embodiments, including the illustrated embodiments, the tang angle is greater than zero degrees (e.g., within a range of about three degrees to seven degrees). This feature can cause the cutting edge 18 of the recip blade 10 to enter a work piece at an angle different than that otherwise defined by a plane of the cutting edge 18, and can thereby allow the recip blade 10 to remain aggressive with deep penetration in a cut for more efficient cutting. In other embodiments (not shown), the tang angle is at least substantially equal to zero degrees.

The cutting edge 18 can be configured to cut various different materials. In the illustrated embodiments, the cutting edge 18 is configured to cut metal and/or wood. In other embodiments (not shown), the cutting edge 18 may additionally or alternatively be configured to cut any other material that is currently known, or that may later become known.

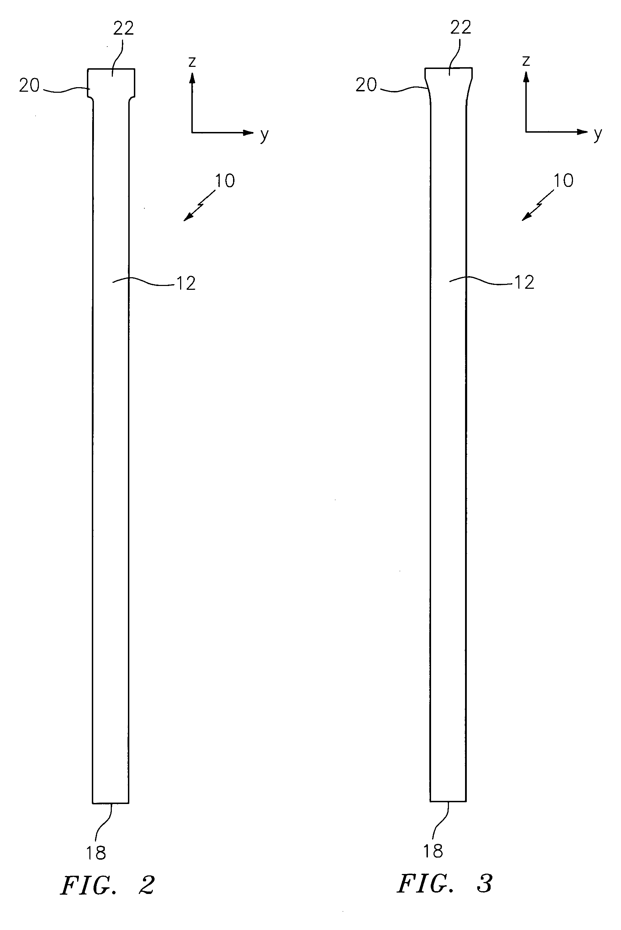

The cutting edge 18 includes a plurality of teeth. In some embodiments, at least some of the teeth are alternatingly set in opposite widthwise-extending directions outwardly from a lengthwise-extending centerline of the recip blade 10. The cross-sectional views of FIGS. 2 and 3 each illustrate only a single tooth that is substantially aligned with a lengthwise-extending centerline (not shown) of the recip blade 10; however, in the illustrated embodiments, some of the teeth are alternatingly set in opposite widthwise-extending directions outwardly from the lengthwise-extending centerline of the recip blade 10.

The number of ribs 20, 21 included in the recip blade 10 can vary. In some embodiments (see FIG. 1), the recip blade 10 includes only one rib 20. In other embodiments (see FIG. 5), the recip blade 10 includes two ribs 20, 21. In still other embodiments (not shown), the recip blade 10 includes more than two ribs 20, 21. In embodiments in which the recip blade 10 includes more than one rib 20, 21 (see FIG. 5), the ribs 20, 21 can be spaced from one another by one or more lengthwise-extending distances. In the embodiment illustrated in FIG. 5, for example, the two ribs 20, 21 are spaced from one another by a lengthwise-extending distance 23.

The one or more ribs 20, 21 each are defined at least partially by an upset (or an area of upset) of the blade body 12 that increases (e.g., sharply increases (see FIG. 2), gradually increases (see FIG. 3)) one or more widthwise-extending thicknesses of the blade body 12 at the ribs 20, 21 in comparison to a widthwise-extending thickness of the blade body 12 at an adjacent portion of the blade body 12. In some embodiments, the ribs 20, 21 are defined at least partially by an upset (or an area of upset) that increases one or more widthwise-extending thicknesses of the blade body 12 at the ribs 20, 21 in comparison to one or more widthwise-extending thicknesses of at least a substantial remainder of the blade body 12. By increasing one or more widthwise-extending thicknesses of the blade body 12 at the ribs 20, 21, the ribs 20, 21 thereby increase a stiffness of the blade body 12 (and thus increase the blade life of the recip blade 10) in comparison to prior art recip blades that do not include one or more ribs.

In some embodiments, the respective thicknesses of the material of the blade body 12 at the one or more ribs 20, 21 is at least about ten percent (10%) greater than a widthwise-extending thickness of the material of the blade body 12 at an adjacent portion of the blade body 12. In other embodiments, the respective thicknesses of the material of the blade body 12 at the ribs 20, 21 is at least about twenty percent (20%) greater than a widthwise-extending thickness of the material of the blade body 12 at an adjacent portion of the blade body 12. In still other embodiments, the respective thicknesses of the material of the blade body 12 at the ribs 20, 21 is at least about thirty percent (30%) greater than a widthwise-extending thickness of the material of the blade body 12 at an adjacent portion of the blade body 12.

The one or more ribs 20, 21 can each be configured in various different ways. For example, the ribs 20, 21 can each be a structural or supporting surface, a raised strip or ridge, and/or another relatively raised surface area extending along at least a portion of the blade body 12. Referring to FIGS. 2 and 3, in the illustrated embodiments, the blade body 12 includes a first side surface and an opposing second side surface, the rib 20 extends in a first widthwise direction relative to the first side surface of the blade body 12, and the rib 20 extends in an opposing second widthwise direction relative to the second side surface of the blade body 12. Although not shown in the drawings, the ribs 20, 21 of the embodiment illustrated in FIG. 5 are configured similar to the rib 20 of the embodiment illustrated in FIG. 2.

The one or more ribs 20, 21 collectively extend along at least one-half (1/2) of a length "L" of the blade body 12. In some embodiments, the ribs 20, 21 collectively extend along at least about three-quarters (3/4) of the length "L" of the blade body 12. In other embodiments, the ribs 20, 21 collectively extend along at least about seventh-eighths (7/8) of the length "L" of the blade body 12. In still other embodiments, the ribs 20, 21 collectively extend along at least substantially the entire length "L" of the blade body 12.

Referring to FIGS. 1-5, in some embodiments, the blade body 12 further defines a backbone 22 that extends in a lengthwise direction along an opposite side of the blade body 12 relative to the cutting edge 18. In such embodiments, the backbone 22 defines a length "L2." In some embodiments in which the recip blade 10 includes only one rib 20, the rib 20 extends along at least substantially the entire length "L2" of the backbone 22. Referring to FIG. 1, in the illustrated embodiment, the rib 20 extends along substantially the entire length "L2" of the backbone 22. In some embodiments in which the recip blade 10 includes more than one rib 20, 21, the ribs 20, 21 collectively extend along at least about one-half (1/2) of the length "L2" of the backbone 22. In other such embodiments, the ribs 20, 21 collectively extend along at least about three-quarters (3/4) of the length "L2" of the backbone 22. In still other such embodiments, the ribs 20, 21 collectively extend along at least about seven-eights (7/8) of the length "L2" of the backbone 22. Referring to FIG. 5, in the illustrated embodiment, the two ribs 20, 21 collectively extend along at least about seven-eights (7/8) of the length "L2" of the backbone 22.

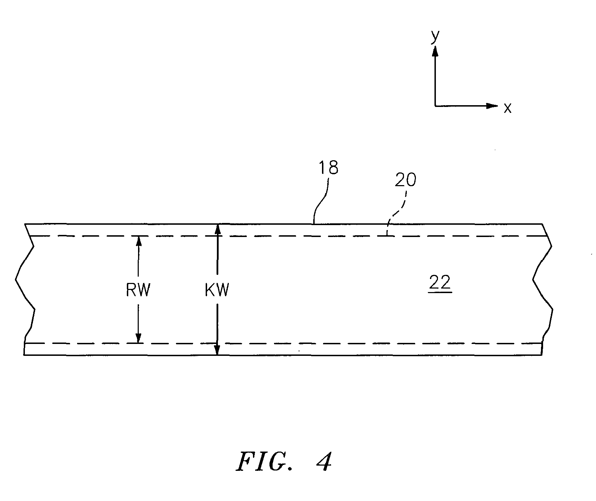

The one or more ribs 20, 21 each have a width that is not greater than, and in some embodiments is less than, the kerf width "KW" of the cutting edge 18. Referring to FIG. 4, in the illustrated embodiment, the cutting edge 18 defines a kerf width "KW," the rib 20 defines a rib width "RW," and the rib width "RW" is less than the kerf width "KW," such that the rib 20 is "located within" the kerf width "KW." This is due at least in part to the fact that some of the teeth are alternatingly set in opposite widthwise-extending directions outwardly from the lengthwise-extending centerline of the recip blade 10, as described above.

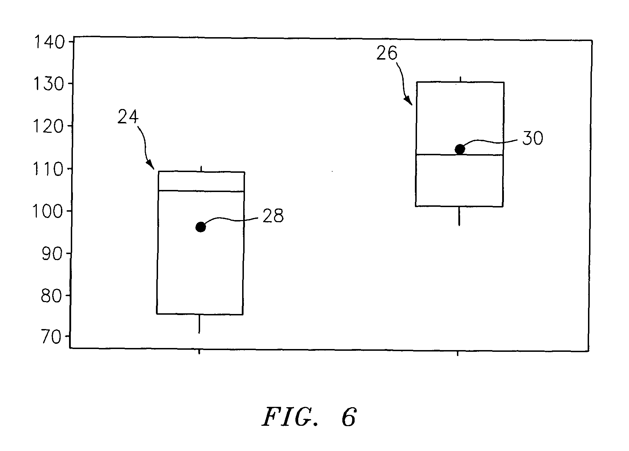

Referring to FIG. 6, the respective blade lives of a present recip blade 10 and a prior art control recip blade were tested. The prior art control recip blade did not include one or more ribs. The blade lives of the respective recip blades were tested by cutting steel electromechanical tubing ("EMT") having a diameter of one and one-half inches (1-1/2 in.). In the graph of FIG. 6, the vertical axis corresponds to the number of cuts performed by the respective recip blades prior to failure. The first data set 24 toward the left side of the graph plots measured blade lives of the prior art control recip blade, and the second data set 26 toward the right side of the graph plots measured blade lives of the present recip blade 10. The data point 28 in the first data set 24 indicates that the control recip blade made, on average, approximately ninety-six (96) cuts prior to failure. The data point 30 in the second data set 26 indicates that the present recip blade 10 made, on average, approximately one hundred fifteen (115) cuts prior to failure. Accordingly, the present recip blade 10 exhibited an approximately twenty percent (20%) increase in blade life over the prior art control blade. This was a surprising and unexpected result, and the increase in blade life is believed to be attributed to one or more of the above-described features of present recip blade 10.

The present recip blade 10 can be manufactured in accordance with the following procedural steps:
i. A bi-metal strip (not shown) is formed by welding (e.g., by electron beam welding) a high-speed steel portion to a spring steel backing;
ii. A cutting edge is then formed by milling teeth into the high speed steel portion of the bi-metal strip;
iii. The cutting teeth of the cutting edge are then set in accordance with any desired set pattern;
iv. The bi-metal strip is then fed through a hardening furnace to harden;
v. The bi-metal strip is then heated again (e.g., with one or more induction heaters) to soften the strip, at least at portions of the strip from which the ends of the respective recip blades 10 are to be formed;
vi. The bi-metal strip is cut (e.g., with a die) at the heated and softened portions of the strip, to form individual recip blades 10 from the strip;
vii. The individual recip blades 10 are then tempered (e.g., by stacking them in trays and placing them in a tempering furnace); and
viii. The tempered recip blades 10 are then painted (if desired), and then packaged and shipped.

In embodiments in which the present recip blade 10 is manufactured in accordance with the above-described procedural steps, the one or more ribs 20, 21 are formed either (1) in the bi-metal strip, before hardening; or (2) in the individual recip blade 10, after the individual recip blade 10 is cut from the bi-metal strip, but before tempering. In some embodiments, the ribs 20, 21 are formed by roll-forming the backbone 22, which thereby forms the upset (or area of upset) that defines the ribs 20, 21.

While several embodiments have been disclosed, it will be apparent to those of ordinary skill in the art that aspects of the present invention include many more embodiments and implementations. Accordingly, aspects of the present invention are not to be restricted except in light of the attached claims and their equivalents. It will also be apparent to those of ordinary skill in the art that variations and modifications can be made without departing from the true scope of the present disclosure. For example, it should be noted that the rib(s) can be orientated in any direction or combinations thereof. In addition, other shapes or structural deformations can be formed in place of or in addition to the rib(s) as shown to increase the cross-sectional thickness of the blade material at the rib(s) and/or to otherwise increase the stiffness of the blade. In some instances, one or more features disclosed in connection with one embodiment can be used alone or in combination with one or more features of one or more other embodiments.

The features disclosed in the above description, the figures and the claims may be significant for the realisation of the invention in its different embodiments individually as in any combination.

### List of reference numerals

- 10: recip blade
- 12: blade body
- 14: tang
- 16: distal end
- 18: cutting edge
- 20, 21: ribs
- 22: backbone
- 23: lengthwise-extending distance
- 24, 26: data set
- 28: data point
- 30: data point
- KW: kerf width
- L, L2: length
- RW: rib width

## Claims

1. A recip blade, comprising:
a blade body;
a tang located at an end of the blade body;
a distal end located at an opposite end of the blade body relative to the tang;
a cutting edge extending in a lengthwise direction at least substantially between the tang and the distal end; and
a rib extending along at least a portion of the blade body, wherein the rib and the cutting edge are spaced from one another by a heightwise-extending distance.

2. A recip blade as defined in claim 1, wherein the rib is a first rib, the recip blade further comprises one or more second ribs, and the first rib and the one or more second ribs are spaced from one another by one or more lengthwise-extending distances.

3. A recip blade as defined in claim 1 or 2, wherein the rib is at least partially defined by an upset which increases a widthwise-extending thickness of the blade body at the rib in comparison to a widthwise-extending thickness of the blade body in at least an adjacent portion of the blade body.

4. A recip blade as defined in claim 3, wherein the widthwise-extending thickness of the blade body at the rib is: (i) at least about 10% greater than the thickness of the blade body at the adjacent portion of the blade body; (ii) at least about 20% greater than the thickness of the blade body at the adjacent portion of the blade body; or (iii) at least about 30% greater than the thickness of the blade body at the adjacent portion of the blade body.

5. A recip blade as defined in one of the preceding claims, wherein the rib defines a structural surface, a supporting surface, a raised strip, a raised ridge, and/or a raised surface area extending along at least the portion of the blade body.

6. A recip blade as defined in one of the preceding claims, wherein the blade body includes a first side surface and an opposing second side surface, the rib extends in a first widthwise direction relative to the first side surface of the blade body, and the rib extends in an opposing second widthwise direction relative to the second side surface of the blade body.

7. A recip blade as defined in one of the preceding claims, wherein the rib extends along: (i) at least one-half (1/2) of a length of the blade body; (ii) at least three-quarters (3/4) of a length of the blade body; or (iii) at least seventh-eighths (7/8) of a length of the blade body.

8. A recip blade as defined in one of the preceding claims, wherein the rib extends along at least substantially an entirety of a length of the blade body.

9. A recip blade as defined in one of the preceding claims, wherein the blade body further defines a backbone that extends in a lengthwise direction along an opposite side of the blade body relative to the cutting edge, and the backbone defines a backbone length.

10. A recip blade as defined in claim 9, wherein the rib extends along at least substantially an entirety of the backbone length.

11. A recip blade as defined in one of the preceding claims, wherein the rib is a first rib, the recip blade further comprises one or more second ribs, the first rib and the one or more second ribs are spaced from one another by one or more lengthwise-extending distances, and the first rib and the one or more second ribs collectively extend along: (i) at least one-half (1/2) of the backbone length; (ii) at least three-quarters (3/4) of a length of the blade body; or (iii) at least seventh-eighths (7/8) of a length of the blade body.

12. A recip blade as defined in one of the preceding claims, wherein the rib has a rib width that is equal to or less than a kerf width of the cutting edge.

13. A recip blade as defined in one of the preceding claims, wherein the cutting edge includes a plurality of teeth, and at least some of the plurality of teeth are alternatingly set in opposite widthwise-extending directions outwardly from a lengthwise-extending centerline of the recip blade.

14. A method, comprising:
providing a recip blade, particularly being designed according to one of the preceding claims, having a blade body, a tang located at an end of the blade body, a distal end located at an opposite end of the blade body relative to the tang, and a cutting edge extending in a lengthwise direction at least substantially between the tang and the distal end; and
forming a rib extending along at least a portion of the blade body and being spaced from the cutting edge by a heightwise-extending distance, the forming step being performed by increasing a widthwise-extending thickness of the blade body at the rib in comparison to a widthwise-extending thickness of the blade body at an adjacent portion of the blade body.

15. The method of claim 14, wherein the recip blade provided in the providing step further includes a backbone that extends in a lengthwise direction along an opposite side of the blade body relative to the cutting edge; and wherein the forming step further includes forming an upset in the blade body, which upset at least partially defines the rib.
